# EUROPÄISCHE PATENTSCHRIFT

(11) **EP 1 712 789 B1**
(45) Veröffentlichungstag und Bekanntmachung des Hinweises auf die Patenterteilung: **09.11.2011**
(21) Anmeldenummer: 06003470.9
(22) Anmeldetag: 21.02.2006
(51) Int. Cl.: F04B 9/02

(54) **Kolbenpumpenantrieb**
Piston pump drive
Mécanisme d'entraînement pour pompe à piston

(30) Priorität: 16.04.2005 DE 102005017476
(43) Veröffentlichungstag der Anmeldung: 18.10.2006
(73) Patentinhaber: ABEL GmbH & Co. KG, 21514 Büchen (DE)
(72) Erfinder: Wiechmann, Friedrich, Dipl.-Ing., 23898 Kühsen (DE)
(74) Vertreter: Hauck Patent- und Rechtsanwälte

(56) Entgegenhaltungen:
- WO-A-95/08860
- DE-A1- 19 916 366
- US-A- 2 814 253
- US-A- 4 277 706

## Beschreibung

Die Erfindung bezieht sich auf eine Kolbenmembran- bzw. Kolbenpumpe nach dem Oberbegriff des Patentanspruchs 1.

Membrankolbenpumpen werden in erster Linie zur Förderung von Feststoffe enthaltenden Fluiden verwendet. Mindestens eine Membran ist einer Pumpenkammer zugeordnet, die im Takt der Membranbewegung in ihrem Volumen vergrößert oder verkleinert wird. Über ein Ansaugventil wird das Medium angesaugt und über ein Abgabeventil abgegeben.

Es ist bekannt, eine Membran unmittelbar von einem linearen Antrieb zu betätigen, z. B. einem Hydraulikzylinder. Häufig wird bei Membranpumpen ein Hydraulikmedium zur Verstellung der Membran vorgesehen, das mit Hilfe eines Kolbens in seinem Volumen verändert wird. Der Kolben ist seinerseits von einem Antrieb linear hin- und herzubewegen.

Es ist bekannt, den Kolben hydraulisch zu betätigen über eine Hydraulikpumpe und eine entsprechende Ventilschaltung. Es ist ferner bekannt, einen Rotationsmotor vorzusehen und den Hydraulikkolben mittels eines Pleueltriebs oder dergleichen zu betätigen. Beide Antriebsarten sind nachteilig im Hinblick auf die Verstellbarkeit der Hublänge und auch auf andere Parameter des Pumpenbetriebes.

Es ist weiter aus WO 95 08860 bekannt eine Planetenrollengetriebe zur Betätigung eines Pumpenkolben zu benutzen.

Der Erfindung liegt die Aufgabe zugrunde, eine Kolbenmembran- bzw. Kolbenpumpe zu schaffen, welche einen einfach aufgebauten Linearantrieb verwendet, mit dem insbesondere die Hublänge auf einfache Weise eingestellt werden kann.

Diese Aufgabe wird durch die Merkmale des Patentanspruchs 1 gelöst.

Bei der erfindungsgemäßen Pumpe weist die Antriebsvorrichtung ein Elektromotor auf, der in Drehverbindung steht mit dem Käfig eines Planetenrollengewindetriebs, dessen Gewindespindel axial mit der Kolbenstange gekoppelt ist. Der Käfig des Planetenrollengewindetriebs ist drehbar im Gehäuse der Antriebsvorrichtung gelagert, jedoch axial fest.

Ein Planetenrollengewindetrieb der angegebenen Art ist an sich bekannt. Er wird als Linearstellzylinder verwendet und ist für die Übertragung großer Kräfte bei langer Standzeit geeignet.

Bei der Erfindung ist ferner ein Weggeber vorgesehen, der nach Maßnahme des von der Gewindespindel zurückgelegten Weges ein Wegsignal erzeugt, das auf eine Steuervorrichtung für den Elektromotor gegeben wird zur Umsteuerung der Drehrichtung des Elektromotors nach einer vorgegebenen Wegstrecke der Gewindespindel. Der Weggeber ist vorzugsweise ein Drehgeber, der die Anzahl der Umdrehungen der Gewindespindel in einen Verstellweg der Gewindespindel umrechnet.

Mit Hilfe einer derartigen Antriebsvorrichtung läßt sich die Hublänge auf einfache Weise variabel einstellen, indem die Anzahl der Umdrehungen verändert wird. Auch die Hubzahl läßt sich verändern, in dem die Drehzahl des Elektromotors verändert wird. Zu diesem Zweck kann der Elektromotor eine geeignete Drehzahlregelung aufweisen.

Ein weiterer Vorteil der erfindungsgemäßen Antriebsvorrichtung ist, daß auch die Geschwindigkeit des Hydraulikkolbens bzw. seine Beschleunigung variabel gemacht werden kann. Die Beschleunigung ist zum einen auf die Werkstoffparameter der Pumpe abzustellen, aber auch auf das zu pumpende Produkt, um große Stöße und Überbelastungen der Membran zu vermeiden.

Ein Ausführungsbeispiel der Erfindung wird nachfolgend anhand von Zeichnungen näher erläutert.
- Fig. 1: zeigt schematisch einen Schnitt durch einen Teil einer Kolbenmembranpumpe nach der Erfindung.
- Fig. 2: zeigt schematisch die Antriebsvorrichtung für die Kolbenmembranpumpe nach Fig. 1.

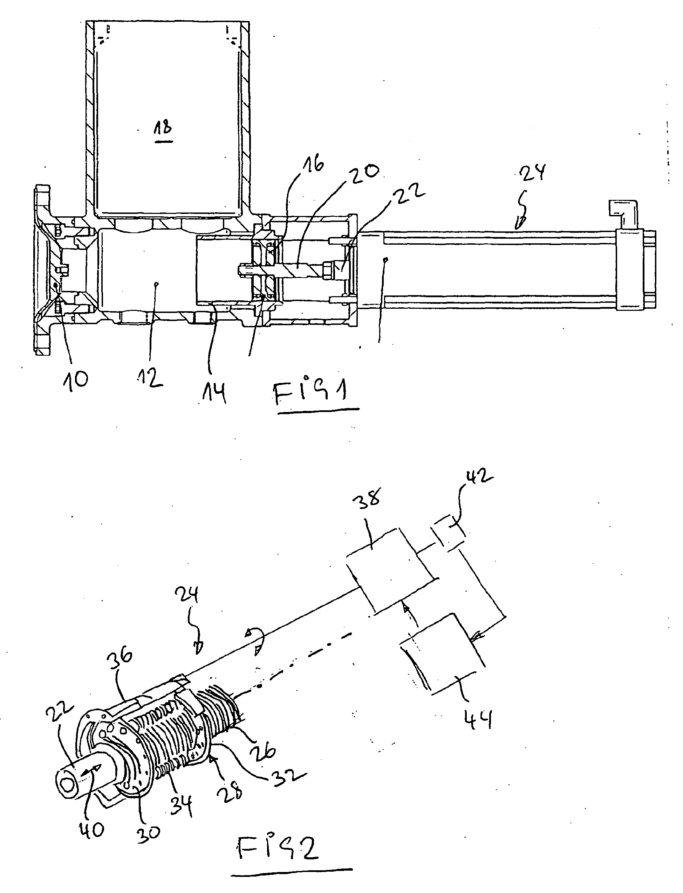

In Fig. 1 ist eine Membran 10 einer Kolbenmembranpumpe zu erkennen, die einem nicht gezeigten Pumpenraum zugeordnet ist. Der Pumpenraum ist über ein Ansaug- und ein Druckventil mit einem Ansaugstutzen bzw. einem Druckstutzen verbunden. In Fig. 1 liegt die Membran 10 in einer zurückgezogenen Stellung an einem Membransitz an. Der Pumpenraum hat dadurch sein maximales Volumen. Auf der anderen Seite der Membran 10 ist eine Hydraulikkammer 12 angeordnet, die mit Hydraulikflüssigkeit gefüllt ist. In die Kammer 12 steht eine Zylinderbuchse 14 hinein, welche einen Kolben 16 aufnimmt. Bei der Bewegung des Kolbens 16 in der Buchse 14 wird die Hydraulikflüssigkeit in der Kammer 12 in einer Hubrichtung unter Druck gesetzt, wodurch die Membran aus der in der Fig. 1 gezeigten Position nach links verstellt wird und dadurch das Volumen im Pumpenraum verringert. Ein Teil der Hydraulikflüssigkeit wird in einen Raum 18 gepumpt bzw. aus diesem herausgezogen, wie dies bei Kolbenmembranpumpen allgemein bekannt ist. Hierauf soll nicht weiter eingegangen werden.

Eine Kolbenstange 20 ist mit einer Antriebsstange 22 eines Linearantriebs 24 verbunden. Der Linearantrieb 24 ist in Fig. 2 detaillierter dargestellt.

Die Stange 22 ist Teil einer Gewindespindel 26, die innerhalb eines Käfigs 28 verläuft. Der zwei axial beabstandete Ringscheiben 30, 32 aufweisende Käfig 28 besitzt drei im 120° Abstand angeordnete Rollenachsen, die sich parallel zur Achse der Gewindespindel 26 erstrecken und Rollen 34 lagern, die in die Gewindegänge der Gewindespindel 26 eingreifen. Der Käfig 28 ist in einem Gehäuse 36 drehbar. Der Käfig 28 ist mithin drehbar gelagert, jedoch axial fest. Er wird von einem Elektromotor 38 angetrieben. Beim Antrieb in einer Drehrichtung wird die Gewindespindel 26 in einer Achsrichtung bewegt. Bei einer Drehrichtungsumkehr des Motors 38 wird die Gewindespindel 26 in die entgegengesetzte Richtung bewegt. Dies ist durch Doppelpfeil 40 angedeutet.

Die Drehung des Käfigs 28 wird von einem Drehgeber 42 sensiert, der die Anzahl der Umdrehungen in eine Wegstrecke der Gewindespindel 26 umrechnet und ein entsprechendes Signal auf eine Steuervorrichtung 44 für den Elektromotor 38 gibt. Der Hubweg der Gewindespindel 26 ist daher durch die voreingestellte Anzahl der Umdrehungen in der Steuervorrichtung 44 festgelegt. Es versteht sich, daß diese Hublänge - in Grenzen - verändert werden kann und damit auch der Hub der Membran 10. Durch Einstellung der Drehzahl des Elektromotors 38 kann die Hubzahl variiert werden. Durch eine entsprechende Vorkehrung in der Steuervorrichtung 44 kann auch die Beschleunigung nach einer Hubrichtungsumkehr variabel eingestellt werden.

## Patentansprüche

1. Kolbenmembran- bzw. Kolbenpumpe, mit einem in einem Zylinder geführten Kolben, der auf eine Kammer wirkt, der eine Pumpenmembran zugeordnet ist, die ihrerseits einer Pumpenkammer zugewandt ist, die über Ventile mit einem Saug- und einem Druckanschluß verbunden ist, einer Antriebsvorrichtung für den Kolben, die über eine Kolbenstange mit dem Kolben verbunden ist, **dadurch gekennzeichnet, daß** die Antriebsvorrichtung (24) einen Elektromotor (38) aufweist, der in Drehverbindung mit dem Käfig (28) eines Planetenrollengewindetriebs steht, dessen Gewindespindel (26) axial mit der Kolbenstange (20) gekoppelt ist, wobei der Käfig (28) drehbar, jedoch axial fest in einem Gehäuse (36) der Antriebsvorrichtung (24) gelagert ist und ein Weggeber (42) vorgesehen ist, der nach Maßgabe des von der Gewindespindel (26) zurückgelegten Weges ein Wegsignal erzeugt, das auf eine Steuervorrichtung (44) für den Elektromotor (38) gegeben wird zur Umsteuerung der Drehrichtung des Elektromotors (38) nach einer vorgegebenen Wegstrecke der Gewindespindel (26).

2. Pumpe nach Anspruch 1, **dadurch gekennzeichnet, daß** der Weggeber (42) einen Drehgeber aufweist, der die Anzahl der Umdrehungen der Gewindespindel (26) in einen Verstellweg umrechnet.

## Claims

1. Membrane piston pump or piston pump, respectively, with a piston guided in a cylinder which acts upon a chamber to which a pump membrane is assigned, which is on its part facing a pump chamber which is connected to an aspirating connection and a pressure connection via valves, a drive means for the piston which is connected to the piston via a piston rod, **characterized in that** the drive means (24) comprises an electric motor (38), which is in rotational connection with the cage (28) of a planetary roller thread drive, the threaded spindle (26) of which is axially coupled to the piston rod (20), wherein the cage (28) being rotatably but axially fixedly beared in a housing (36) of the drive means (24) and a path transmitter (42) is provided which generates a path signal in accordance with the path travelled by the threaded spindle (26), which signal is given to a control means (44) for the electric motor (38) for reversing the rotational direction of the electric motor(38) after a predetermined path of the threaded spindle (26).

2. Pump according to claim 1, **characterized in that** the path transmitter (42) has a rotation transmitter which converts the number of rotations of the treaded spindle (26) into a shifting path.

## Revendications

1. Pompe à piston-membrane ou à piston, avec un piston guidé dans un cylindre qui agit dans une chambre à laquelle est associée une membrane de pompe qui est à son part vis-à-vis d'une chambre de pompe qui est raccordée à un raccordement de succion et à un raccordement de pression à travers des soupapes, avec un dispositif d'entraînement pour le piston qui est raccordé au piston à l'aide d'une tige de piston, **caractérisée en ce que**l le dispositif d'entraînement (24) a un moteur électrique (38) qui est en connexion rotative au cage (28) d'un entraînement à rouleaux planétaire dont la broche filetée (26) est accouplée de façon axiale à la tige de piston (20), le cage étant logé de façon rotative mais bloquée par rapport à l'axe dans un boîtier (36) du dispositif d'entraînement (24) et que un transmetteur de chemin (42) est pourvu qui génère un signal de chemin en fonction du chemin parcouru par la broche filetée (26) qui est livré à un dispositif de commande (44) pour le moteur électrique (38) afin de changer le sens de rotation du moteur électrique (38) en fonction d'un chemin prédéterminé de la broche filetée (26).

2. Pompe selon la revendication 1, **caractérisée e ce que** le transmetteur de chemin (42) a un transmetteur de rotation qui convertit le nombre des rotations de la broche filetée (26) en un chemin d'ajustement.
